# EUROPEAN PATENT APPLICATION

(11) **EP 4 657 311 A1**
(43) Date of publication of application: **03.12.2025**
(21) Application number: 24305857.5
(22) Date of filing: 30.05.2024
(51) Int. Cl.: G06K 19/077

(54) **DATA CARRIER WITH MOLDED PILLAR CONNECTIONS**

(71) Applicant: THALES DIS FRANCE SAS, 92190 Meudon (FR)
(72) Inventor: SEBAN, Frédérick, 13390 Auriol (FR); TIBILETTI, Lucie, 13600 La Ciotat (FR); DELLYS, Alexis, 13390 Auriol (FR); CHOO, Yeow Chun Ricky, 669562 Singapore (SG); BRAITHWAITE, Gregory, 13600 La Ciotat (FR)
(74) Representative: Castelo, Jérôme

(57) **Abstract**

A semi-finished product (1) for a data carrier (2) comprising at least one antenna (3) for communication with an external device and at least one electronic module (4) being electrically connected to the antenna (3) and a method of manufacturing are provided. The semi-finished product (1) comprises a substrate (5) and at least two connection elements (6, 6a). The substrate (5) is electrically non-conductive, and the connection elements (6, 6a) are electrically conductive. The connection elements (6, 6a) are at least partially embedded in the substrate (5). The connection elements (6, 6a) are configured to electrically connect the antenna (3) and the electronic module (4) of the data carrier (2).

## Description

### TECHNICAL FIELD

The present invention relates to a semi-finished product for a data carrier as claimed in claim 1, to a method of manufacturing such a semi-finished product according to claim 8, to a data carrier comprising such as semi-finished product according to claim 12, and to a method of manufacturing such a data carrier according to claim 14.

### PRIOR ART

Current methods of manufacturing data carriers comprising electronic modules and antennas such as smart cards involve a lot of manufacturing steps such as card molding, embedding of the module in the smart card, etc. This is particularly disadvantageous if the data carrier comprises a metallic layer, wherein the prior art solutions typically require the placement of the metallic layer into apertures of a polymeric sheet, and wherein said apertures are thereafter covered with a resin to fill the space around the metallic layers. Moreover, since the metallic layer is often of a large thickness, such a manufacturing makes it difficult to create appropriate apertures for its insertion.

### SUMMARY OF THE INVENTION

It is an object of the present invention to provide a method of manufacturing a data carrier that overcomes the drawback of the prior art. In particular, it is an object to provide a method of manufacturing a data carrier that requires fewer manufacturing steps and is less costly.

This object is achieved with a semi-finished product according to claim 1. In particular, a semi-finished product for a data carrier such as a smart card is provided, wherein the data carrier comprises at least one antenna for communication with an external device and at least one electronic module being electrically connected to the antenna. The semi-finished product comprises a substrate, and at least two connection elements. The substrate is electrically non-conductive. The connection elements are electrically conductive. The connection elements are at least partially embedded in the substrate. The connection elements are configured to electrically connect the antenna and the electronic module of the data carrier.

As will be explained in greater detail below, the semi-finished product can be provided in a data carrier such as a smart card, wherein the smart card comprises at least one electronic module and at least one antenna.

The electronic module preferably corresponds to an electronic module as it is known in the art and/or is commercially available. That is, the electronic module preferably comprises an integrated circuit as it is known in the art. The electronic module can be configured for a wireless communication with an external device such as a payment terminal. Additionally or alternatively, the electronic module can be configured for a wired communication with the external device.

The antenna is preferably configured to communicate with the remote device such as a payment terminal. The antenna preferably is an antenna as it is known in the field of the art, for instance an RFID antenna that is configured to transmit information between the electronic module, in particular its integrated circuit, and a contactless reader. The antenna is formed by a continuous wire or line. The antenna can have different shape such as spiral, loop, zig zag depending on the design and performance requirements.

In the data carrier, the connection elements of the semi-finished product electrically connect the antenna and the electronic module and thereby enable a communication between the electronic module and the antenna.

Said connection preferably is a wired connection, that is, a physical connection, wherein each of the connection elements is connected to the antenna and the electronic module. In particular, the connection elements preferably comprise in each case two connection regions, in particular free end regions, one of which being connectable to the electronic module and the other of which being connectable to the antenna. The antenna preferably comprises antenna pads and that the electronic module preferably comprises module pads, and wherein the connection elements, in particular their connection regions, are attached to the antenna pads and the module pads, respectively. Examples of pads are metallic insert pads, i.e. tin pads or zig zag pads. The attachment of the connection elements, in particular of their connection regions, is preferably achieved with the aid of anisotropic conductive film (ACF) bonding or an adhesive element such as silver glue or solder paste, i.e. according to methods well-known in the art.

The present invention is based on the insight that said connection or communication between the antenna and the electronic module of a data carrier can be provided via a semi-finished product that comprises the connection elements establishing said connection or communication. The semi-finished product allows, among other things, a simpler structure of the data carrier as well as simplified production, as explained in more detail below.

The connection elements preferably extend from a top side of the substrate towards a bottom side of the substrate and preferably beyond the top side and/or the bottom side of the substrate.

The substrate preferably defines a top side and an opposite bottom side, and wherein the connection elements extend at least partially and preferably entirely from the top side towards the bottom side. In other words, the connection elements preferably extend fully through the entire substrate. Additionally or alternatively, the connection elements can extend beyond the top side and/or the bottom side of the substrate. To this end it is particularly preferred that the connection elements extend fully between the top side and the bottom side of the entire substrate as well as extend beyond the top side and beyond the bottom side of the substrate. These regions of the connection elements that extend beyond the top side and the bottom side of the substrate preferably comprise the connection regions, in particular free end regions, mentioned earlier that are preferably connected to the electronic module and the antenna in the data carrier.

The connection elements preferably extend parallel to one another and/or are arranged at a distance from one another with respect to a width direction of the semi-finished product.

The connection elements preferably extend parallel to one another with respect to a length direction extending from the top side of the substrate towards the bottom side of the substrate. The connection elements are preferably arranged at a distance from one another with respect to a width direction of the semi-finished product, wherein said width direction preferably extends perpendicularly to the length direction of the substrate. A distance between the connection elements with respect to the width direction of the substrate preferably corresponds to a distance between the module pads of the electronic modules and/or between the antenna pads of the antenna.

The connection elements preferably comprise or consist of at least one electrically conductive metal compound such as a metal and/or a metal alloy. For instance, the connection elements can comprise or consist of silver and/or copper and/or gold and/or aluminium and/or iron and/or chrome or mixtures or alloys thereof.

Each of the connection elements are advantageously dimensioned in order to overlap at least two adjacent portions of wire of the antenna. Preferably, each of the connection element is dimensioned in order to overlap at least three adjacent portions of wire of the antenna. Such dimensions of the connection element allow for a reliable connection between the antenna and the electronic module. Indeed, with a connection element dimensioned in order to overlap at least two adjacent portions of wire of the antenna, the contact between the antenna and the connection element is ensured even if the antenna is shifted to one side or the other.

The connection elements in each case preferably have a cylindrical shape or a rectangular shape or the shape of a wire.

Advantageously, the connection elements each have a diameter at least equal to 400 micrometer. Preferably, the diameter of the connection elements is in the range of 500 micrometer to 1500 micrometer, more preferably in the range of 700 micrometer to 1300 micrometer such as for instance 1000 micron. Such diameter of the connection element allows for a reliable connection between the antenna and the electronic module as it allows to overlap several adjacent portions of wire of the antenna.

A length of the connection elements, at least prior to the incorporation of the semi-finished product in the data carrier, preferably is in the range of 200 micrometer to 650 micrometer with respect to the length direction of the substrate.

Additionally or alternatively, a length of the connection elements at least prior to the incorporation of the semi-finished product in the data carrier, preferably equals or is larger than a length of the semi-finished product with respect to a length direction of the semi-finished product and/or a length of the substrate with respect to the length direction of the substrate.

The length of the semi-finished product along the length direction of the semi-finished product preferably equals the length of the substrate along the length direction of the substrate at least prior to the incorporation of the semi-finished product into the data carrier.

The semi-finished product, at least before being incorporated into the data carrier, preferably defines a top side and an opposite bottom side. At least part of the top side of the substrate preferably provides at least part of the top side of the semi-finished product and/or at least part of the bottom side of the substrate preferably provides at least part of the bottom side of the semi-finished product.

The substrate preferably comprises or consists of at least one plastic. Said plastic preferably is a thermoplastic plastic or a thermosetting plastic. Additionally or alternatively, the plastic preferably is configured to be cured and/or to be casted.

The substrate particularly preferably comprises or consists of a UV-curing resin or a thermal resin or a thermosetting resin. Examples of a UV-curing resin are an epoxy resin and/or a urethane resin, for instance an epoxy acrylate resin, an urethane acrylate resin, a methacrylate resin such as an epoxy methacrylate resin. Examples of a thermosetting resin include a polyurethane resin.

The substrate preferably is a single-piece element, i.e. made in one-piece.

The semi-finished product preferably further comprises at least one metallic layer.

The metallic layer is arranged in a region of the top side of the semi-finished product and preferably at least partially provides at least part of the top side of the semi-finished product,

The metallic layer preferably extends until an edge of the semi-finished product. In particular, the metallic layer preferably entirely extends through the semi-finished product along a width direction of the semi-finished product, wherein said width direction preferably extends perpendicularly to the length direction of the semi-finished product.

The metallic layer preferably comprises or consists of at least one metallic compound such as a metal and/or a metal alloy. Conceivable metals are iron, brass, copper, titanium, palladium, or gold. Conceivable metal alloys comprise at least one of iron, brass, copper, titanium, palladium, gold or carbon. For example, the metallic layer can comprise or consist of steel.

The metallic layer can be electrically conductive or non-conductive.

The metallic layer preferably comprises at least one through-hole, and wherein said through-hole is preferably provided in the region of the connection elements. That is, at least parts of the connection elements are located within the through-hole of the metallic layer. Additionally or alternatively, when seen along the length direction of the semi-finished product, the connection elements preferably extend at least partially within and/or below the through-hole of the metallic layer. Again in other words, the connection elements are preferably not covered by the metallic layer but are arranged at a location of the through-hole of the metallic layer.

The through-hole of the metallic layer is preferably at least partially filled with the substrate.

A thickness of the metallic layer with respect to the length direction of the semi-finished product preferably is in the range of 200 micrometer to 500 micrometer. Said thickness is preferred in the event of a data carrier having an ISO card size with 85.6 to 86.6 and 53.98 to 54.98 dimensions in x,y-directions, i.e. perpendicular to the length direction.

The semi-finished product preferably comprises at least one shielding layer.

The shielding layer is preferably configured to shield the antenna and/or the electronic module of the data carrier from magnetic fields.

The shielding layer preferably comprises or consists of at least one metallic compound such as a metal and/or a metal alloy. The shielding layer particularly preferably comprises or consists of at least one metal alloy such as a ferromagnetic alloy, for instance a nickel-iron soft ferromagnetic alloy such as mu-metal.

The shielding layer preferably is at least partially and preferably entirely embedded within the substrate. Additionally or alternatively, the shielding layer is spaced from an edge of the semi-finished product. In other words, the shielding layer preferably does not extend all the way to the edge of the semi-finished product when seen along the width direction of the semi-finished product.

The shielding layer preferably comprises at least one through-hole, and wherein said through-hole is preferably provided in the region of the connection elements.

That is, at least parts of the connection elements are located within the through-hole of the shielding layer. Additionally or alternatively, when seen along the length direction of the semi-finished product, the connection elements preferably extend at least partially within and/or below the through-hole of the shielding layer. Again in other words, the connection elements are preferably not covered by the shielding layer but are arranged at a location of the through-hole of the shielding layer.

The through-hole of the shielding layer is preferably at least partially filled with the substrate.

The through-hole of the shielding layer is preferably aligned with the through-hole of the metallic layer when seen along the length direction of the semi-finished product. In other words, the through-hole of the metallic layer and the through-hole of the shielding layer are preferably at least partially congruent when seen along the length direction of the semi-finished product.

When seen from the top side of the semi-finished product towards the bottom side of the semi-finished product along the length direction of the semi-finished product, the shielding layer is preferably arranged immediately after the metallic layer. To this end it is preferred that the metallic layer and the shielding layer are in surface contact with one another. However, it is likewise conceivable that an adhesive element or the like is arranged between the metallic layer and the shielding layer in order to enhance a connection between the metallic layer and the shielding layer. It is however likewise conceivable that the substrate extends between the metallic layer and the shielding layer.

A thickness of the shielding layer with respect to the length direction of the semi-finished product preferably is in the range of 50 micrometer to 100 micrometer. Said thickness is preferred in the event of a data carrier having an ISO card size with 85.6 to 86.6 and 53.98 to 54.98 dimensions in x,y-directions, i.e. perpendicular to the length direction.

In another aspect, a method of manufacturing a semi-finished product as described above is provided.

Any statements made with respect to the semi-finished product preferably likewise apply to its method of manufacturing and vice versa.

The method of manufacturing the semi-finished product comprising the steps of:
i) Providing a mould;
ii) Providing the at least two connection elements mould;
iii) Inserting, in particular injecting, one or more components forming the substrate into the mould, and
iv) Hardening the injected one or more components.

To this end it is preferred that steps i) to iv) are carried out in sequence.

That is, the semi-finished product is preferably generated by inserting, in particular injecting, one or more components forming the substrate. To this end it is particularly preferred that the semi-finished product is manufactured by injection-moulding or by cold lamination, wherein the one or more components forming the substrate are inserted into the mould and are thereafter pressed until they are hard.

As mentioned earlier, the substrate and thus the one or more components forming the substrate preferably comprises or consists of at least one plastic. Said plastic preferably is a thermoplastic plastic or a thermosetting plastic. Additionally or alternatively, the plastic preferably is configured to be cured and/or to be casted and/or to be hardened.

The substrate and thus the one or more components forming the substrate particularly preferably comprises or consists of a UV-curing resin or a thermal resin and/or a thermosetting resin. Examples of a UV-curing resin are an epoxy resin and/or a urethane resin, for instance an epoxy acrylate resin, an urethane acrylate resin, a methacrylate resin such as an epoxy methacrylate resin. Examples of a thermosetting resin include a polyurethane resin.

The mould preferably comprises a bottom part and a top part, and wherein the bottom part and/or the top part comprises at least two recesses. An end region of the connection elements is in each case preferably arranged in the recesses of the bottom part and/or in the recesses of the top part.

In particular, it is preferred to arrange one of the end regions of the connection elements in one of the recesses of the bottom part of the mould, to then arrange further components of the semi-finished product into the bottom part of the mould such as the metallic layer and/or the shielding layer, and to then arrange the top part of the mould on the bottom part of the mould in order to close the mould, wherein the other end regions of the connection elements are preferably arranged in the recesses of the top part of the mould. Thereafter, the one or more components forming the substrate are preferably inserted into the mould.

The end regions of the connection elements preferably correspond to the connection regions, in particular to the free end regions of the connection elements mentioned earlier.

Prior to inserting the one or more components forming the substrate into the mould, at least one metallic layer and/or at least one shielding layer are preferably arranged in the mould.

That is, and as just mentioned, it is preferred to arrange the metallic layer and/or the shielding layer in the bottom part of the mould prior to closing the bottom part of the mould with the top part of the mould and prior to the insertion of the one or more components forming the substrate.

To this end the metallic layer and/or the shielding layer are preferably arranged in the bottom part of the mould such that their through-holes are aligned, and wherein the connection elements can at least partially extend through the through-holes.

The mould preferably comprises a plurality of sub-moulds, wherein at least two connection elements of a plurality of connection elements are preferably arranged in each sub-mould of the plurality of sub-moulds. The one or more components forming the substrate are preferably inserted into each sub-mould of the plurality of sub-moulds. A plurality of semi-finished products is preferably manufactured at a time.

That is, the mould can comprise a plurality of sub-moulds, in particular a plurality of bottom part moulds and top part moulds comprising at least two recesses as described above. At least two connection elements can then be inserted into the at least two recesses of the bottom part moulds. If present, further components of the semi-finished product such as metallic layers and/or shielding layers can then be arranged in each of the bottom part moulds as described above. Thereafter, the top part moulds are preferably arranged on a corresponding bottom part mould in order to close the sub-moulds. Thereafter, the one or more components forming the substrate are preferably inserted into each sub-mould of the plurality of sub-moulds. In this way, a plurality of semi-finished products is manufactured at a time.

In another aspect, a data carrier is provided, wherein said data carrier comprises at least one semi-finished product as described above and/or as manufactured in the method as described above. The data carrier further comprises at least one electronic module, and at least one antenna. The electronic module and the antenna are electrically connected to one another via the connection elements of the semi-finished product. The electronic module and the antenna are preferably an electronic module and antenna as described initially.

The data carrier preferably is a smart card.

The antenna is preferably arranged in a carrier layer. As will be explained in greater detail below, said carrier layer preferably comprises or consists of at least one plastics, in particular a thermoplastic such as poly(vinylchloride) (PVC).

Said carrier layer is preferably connected to the semi-finished product, in particular to the bottom side of the semi-finished product, i.e. opposite the metallic layer, if present. Said connection is preferably established by laminating the semi-finished product, in particular its bottom side, to the carrier layer.

In particular, said carrier layer preferably provides or is part of a card body as it is well-known in the art. That is, the data carrier preferably comprises a card body comprising one or more layers, preferably the said carrier layer and particularly preferably also one or more further layers, i.e. a plurality of layers. Said plurality of layers preferably are transparent layers and/or comprises or consists of at least one plastics, in particular thermoplastics such as polycarbonate (PC), polyvinyl chloride (PVC), amorphous polyester (A-PET), copolyester (PET-G) polyethylene terephthalate (PET), or biaxially-oriented polyethylene terephthalate (boPET) or ABS, etc.

Hence, the data carrier preferably comprises a semi-finished product being arranged on a card body. The data carrier preferably defines a top side and an opposite bottom side, wherein the semi-finished product, in particular its top side and particularly preferably its metallic layer, if present, provides the top side of the data carrier. The bottom side of the data carrier can be provided by a layer of the card body, herein called bottom layer of the card body. However, it is likewise conceivable that the bottom side of the data carrier is provided by a protection layer, also referred to as an overlay layer. Said protection layer or overlay layer preferably comprises or consists of at least one plastics, in particular a thermoplastic such as poly(vinylchloride) (PVC), but preferably is thinner than the layers of the card body.

Said protection layer or overlay layer is preferably connected to the bottom layer of the card body via lamination.

Said protection layer or overlay layer can comprise a magnetic stripe that is preferably embedded within the protection layer or overlay layer.

In another aspect, a method of manufacturing a data carrier as described above is provided. Any statements made with regard to the data carrier per se preferably likewise apply to the method of manufacturing the data carrier and vice versa.

The method of manufacturing the data carrier comprises the steps of:
i) Manufacturing at least one semi-finished product as described in the method above,
ii) Providing at least one antenna, and
iii) Providing at least one electronic module, and
iv) Connecting the connection elements with the electronic module and the antenna.

To this end it is preferred that steps i) to iv) are carried out in sequence.

The antenna is preferably provided in the carrier layer mentioned above and as described below.

Prior to providing the electronic module, at least one semi-finished product preferably is at least partially arranged in at least one carrier layer, and wherein at least one of:
- the carrier layer preferably comprises at least one aperture in which the semi-finished product is at least partially arranged,
- the carrier layer preferably comprises or consists of at least one plastics, in particular PVC,
- the carrier layer preferably has a sheet-form having an area expansion being larger than an area expansion of the semi-finished product,
- the carrier layer preferably comprises the antenna, or
- a plurality of semi-finished products are preferably at least partially arranged in the carrier layer.

That is, before the electronic module is provided in the data carrier, it is preferred that at least one semi-finished product is at least partially arranged in at least one carrier layer as described earlier.

That is, the carrier layer preferably comprises or consists of at least one plastics, in particular of a thermoplastics such as PVC.

The antenna is preferably embedded in the carrier layer, particularly preferably wire embedded in the carrier layer. In fact, the antenna is preferably produced by inlaying a conductive wire in a plastic sheet, in particular in a PVC sheet.

It is furthermore preferred that the carrier layer as an area expansion being larger than an area expansion of the semi-finished product. In particular, the carrier layer preferably has a sheet-form and particularly preferably corresponds to a so-called PVC sheet.

The carrier layer preferably comprises at least one aperture and preferably a plurality of apertures into a plurality of semi-finished products are least partially arranged. That is, the semi-finished products are preferably arranged in the carrier layer in a sheet process. The apertures in the carrier layer preferably correspond to punched holes.

Hence, unlike in the state of the art, wherein data carriers comprising a metallic layer, i.e. metal cards, are typically manufactured by placing the metallic layer into the apertures of a polymeric sheet, and wherein said apertures are thereafter covered with a resin to fill the space around the metallic layers, these steps can be omitted in the present method. Instead, the metallic layers can be provided via the semi-finished products, and which semi-finished product merely needs to be connected such as laminated to the carrier layer or the card body, respectively.

Prior to laminating the semi-finished product to the carrier layer or the card body, it is preferred to collate these components. That is, it is preferred to align the semi-finished product, the carrier layer and any further layer such as the protection layer or overlay layer for instance via ultrasonic welding. Thereafter, a lamination such as a hot lamination is preferably performed.

The semi-finished product is preferably at least partially arranged in the carrier layer prior to providing the electronic module. That is, a collating and/or lamination of the semi-finished product and the carrier layer or the card body, respectively, is preferably performed before the electronic module is provided in the data carrier.

The electronic module is preferably at least partially arranged in a cavity formed in the semi-finished product. The cavity is preferably milled and/or formed in the substrate of the semi-finished product. The cavity is particularly preferably milled into the semi-finished product, in particular into the substrate, in the region of the connection elements.

After insertion into the cavity, the electronic module is preferably connected to an end region of the connection elements as mentioned earlier.

To this end it is particularly preferred that the electronic module, in particular its top side, is arranged flush with the top side of the data carrier.

As mentioned earlier, it is preferred to provide a plurality of semi-finished products for instance in a sheet process. Consequently, it is preferred to provide a plurality of electronic modules, wherein this plurality of electronic modules is preferably at least partially arranged in a plurality of cavities formed in the pluralities of semi-finished products.

A plurality of individual data carriers can then be obtained by singulating the plurality of semi-finished products being at least partially arranged in the carrier layer. The singulation is performed in a manner well-known in the art, for instance by cutting, punching, laser, routing, grinding or via a water jet.

The singulation into the individual smart cards is preferably performed into a particular format being associated with an end-use of the smart cards.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1 a-1d: schematically show different steps of manufacturing a semi-finished product for a data carrier according to the invention;
- Fig. 2: shows a bottom view on a semi-finished product according to the invention being manufactured in the method according to figures 1a to 1d;
- Fig. 3: schematically shows an insertion of the semi-finished product in a carrier layer of a data carrier according to the invention;
- Fig. 4: shows a sectional view through a data carrier comprising the semi-finished product according to the invention prior to the insertion of an electronic module;
- Fig. 5: shows a sectional view through the data carrier according to figure 4, wherein the electronic module is inserted into the data carrier;
- Fig.6: shows a zoom of a sectional view through the data carrier according to figure 4 with adjusted dimension ratio.

### DESCRIPTION OF PREFERRED EMBODIMENTS

Various aspects of a semi-finished product 1 and a data carrier 2 comprising said semi-finished product 1 according to the invention shall now be illustrated with reference to the figures.

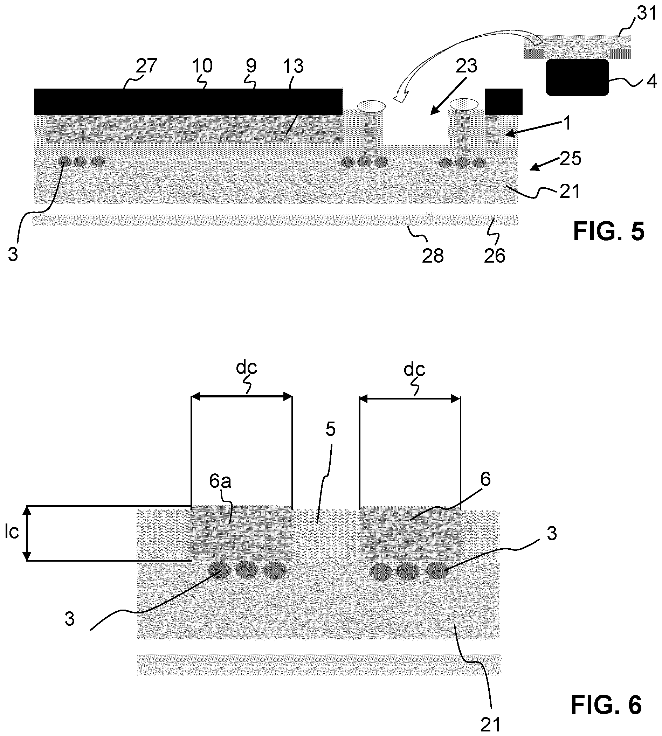

It must be noted that the figures are for illustrative purpose only and are in no way limiting the scope of the invention. In addition, the representation of the connection elements is adapted for practical reasons. In an actual semi-finished product and a data carrier comprising said semi-finished product, the thickness of said semi-finished product and said data carrier is particularly low, so that the connection pads have a diameter significantly greater than their length. This aspect is better represented in figure 6.

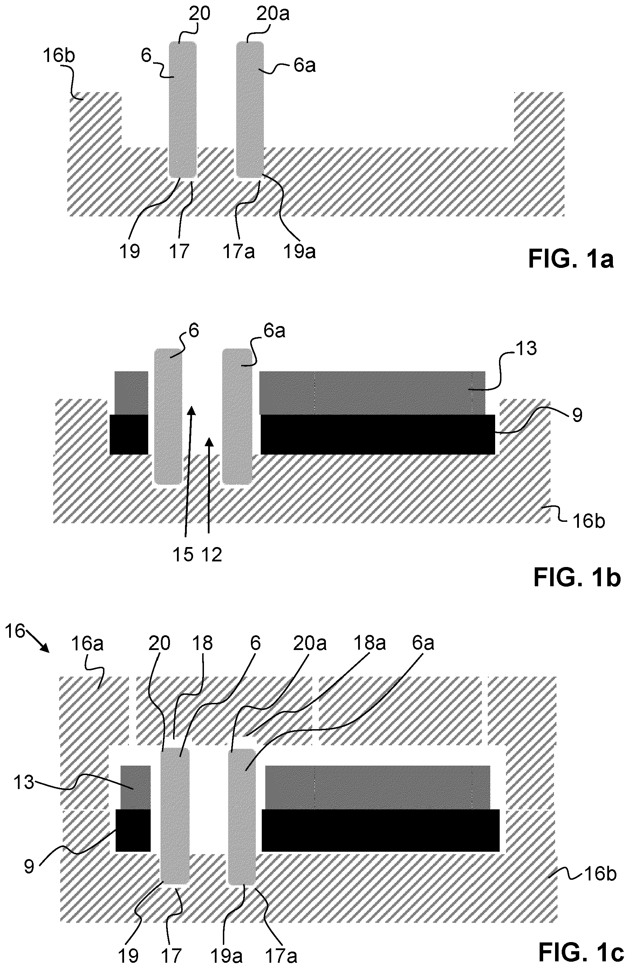

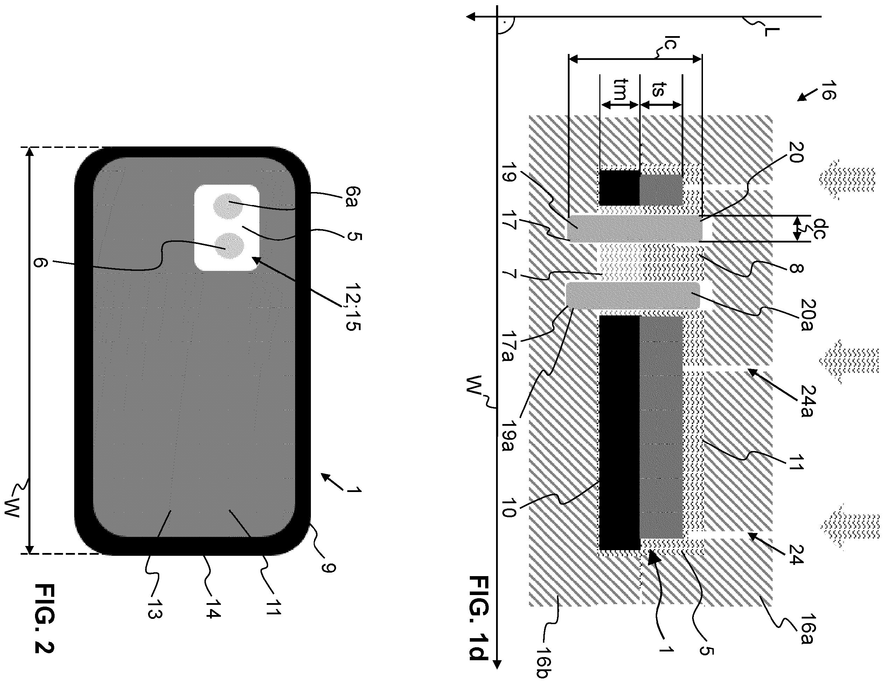

That is, figures 1a to 1d depict individual steps of manufacturing a semi-finished product 1 for a data carrier 2 according to the invention. To this end, in a first step as depicted in figure 1a, a bottom part 16b of a mould 16 is provided, wherein said bottom part 16b comprises two recesses 17, 17a. Two end regions 19, 19a of two connection elements 6, 6a are arranged in said two recesses 17, 17a. Said end regions 19, 19a of the connection elements 6, 6a correspond to free end regions of the connection elements 6, 6a. The connection elements 6, 6a extend parallel to one another and are arranged at a distance from one another with respect to a width direction W of the semi-finished product 1. The connection elements 6, 6a consist of an electrically conductive metal compound and have an elongated, rectangular shape. In the depicted example, a diameter dc of the connection elements 6, 6a is 700 micrometer and a length Ic of the connection elements 6, 6a is 400 micrometer with respect to a length direction L of the semi-finished product running perpendicularly to the width direction W of the semi-finished product 1, see figure 1d.

After insertion of the two connection elements 6, 6a into the bottom part 16b of the mould 16, further components of the semi-finished product 1 are inserted into the bottom part 16b of the mould 16, see figure 1b. Here, a metallic layer 9 followed by a shielding layer 13 are arranged on top of one another with respect to the length direction L of the semi-finished product. The metallic layer 9 and the shielding layer 13 in each case comprise a through-hole 12; 15, wherein these layers 9; 13 are arranged such in the bottom part 16b of the mould 16 that their through-holes 12; 15 are aligned, i.e. congruent, and wherein the connection elements 6, 6a are located within the through-holes 12; 15 and extend through the through-holes 12; 15. In the depicted example, a thickness tm of the metallic layer 9 with respect to the length direction L of the semi-finished product 1 is 200 micrometer, and a thickness ts of the shielding layer 13 with respect to the length direction L of the semi-finished 1 product is 50 micrometer, see figure 1d.

The length Ic of the connection elements 6, 6a is greater than the cumulative thickness tm of the metallic layer 9 and ts of the shielding layer 13. In other words, Ic > ts + tm.

In a next step depicted in figure 1c, a top part 16a of the mould 16 is provided and placed on the bottom part 16b of the mould 16 so as to close the mould 16. The top part 16a of the mould 16 comprises two recesses 18, 18a as well, wherein said recesses 18, 18a are arranged opposite to the recesses 17, 17a of the bottom part 16b of the mould 16 in order to receive the opposite end regions 20, 20a of the connection elements 6, 6a.

Thereafter, the one or more components forming the substrate 5 are inserted into the mould 16 via insertion slots 24, 24a, ... provided in the top part 16a of the mould 16 and are thereafter hardened, whereby the substrate 5 is formed, see figure 1d. In the depicted example, the substrate 5 is formed by injection-moulding or by cold lamination, wherein the one or more components forming the substrate 5 are inserted into the mould 16 and are thereafter pressed until they are hard.

As further follows from figure 1d and from figure 2, the thus produced semi-finished product 1 comprises a substrate 5 being a single-piece element, i.e. made in one-piece, wherein the connection elements 6, 6a are at least partially embedded in the substrate 5. Moreover, the shielding layer 13 is entirely embedded within the substrate 5 but spaced from an edge 14 of the semi-finished product 1. That is, the shielding layer 13 does not extend all the way to the edge 14 of the semi-finished 1 product when seen along the width direction W of the semi-finished product 1. The metallic layer 9 however extends until the edge 14 of the semi-finished product 1, i.e. the metallic layer 9 extends entirely through the semi-finished product 1 along the width direction W of the semi-finished product 1. The through-hole 15 of the shielding layer 13 and the through-hole 12 of the metallic layer 9 comprise the connection elements 6, 6a and are filled with the substrate 5.

The metallic layer 9 is arranged in a region of the top side 10 of the semi-finished product 1 and at least partially provides at least part of the top side 10 of the semi-finished product 1. Moreover, when seen from the top side 10 of the semi-finished product towards an opposite bottom side 11 of the semi-finished product 1 along the length direction L of the semi-finished product 1, the shielding layer 13 is arranged immediately after the metallic layer 9.

The substrate defines a top side 7 and an opposite bottom side 8, and wherein the connection elements 6, 6a extend entirely from the top side 7 towards the bottom side 8 and beyond the top side 7 of the substrate 5. These regions of the connection elements 6, 6a that extend beyond the top side 7 and are arranged at the location of the bottom side 8 of the substrate 5 comprise the end regions 19, 19a; 20; 20a, i.e. connection regions corresponding here to the free end regions, that will be connected to the electronic module 4 and the antenna 3 in the data carrier 2.

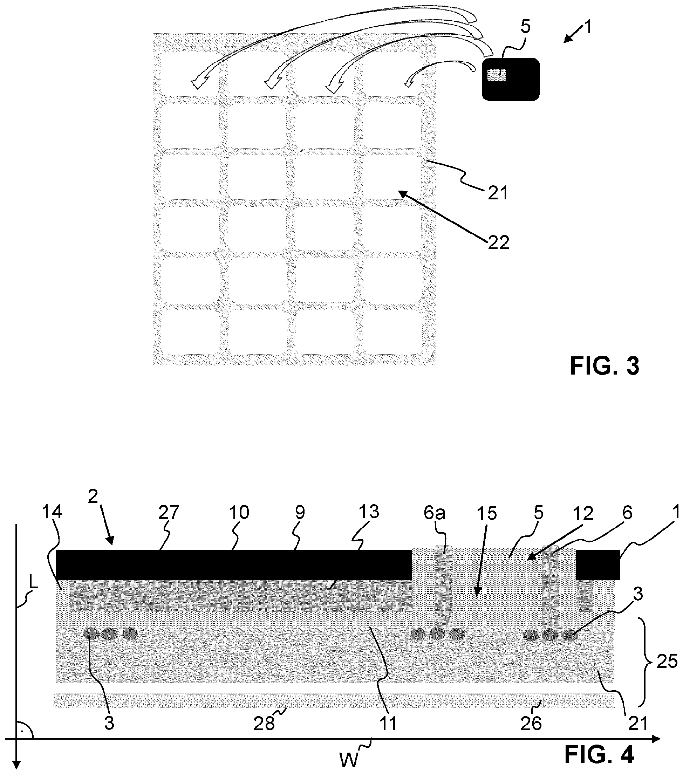

That is, and as follows from figures 3 to 5, a data carrier 2 is manufactured that comprises the semi-finished product 1, wherein the data carrier 2 comprises at least one antenna 3 and at least one electronic module 4, and wherein the connection elements 6, 6a establish an electrical connection between the electronic module 4 and the antenna 3.

Prior to providing the electronic module 4, at least one and in particular a plurality of semi-finished products 1 is partially arranged in a plurality of apertures of a carrier layer 21, see figure 3. In the depicted example, the carrier layer 21 corresponds to a PVC sheet.

Although not visible in figure 3, the carrier layer 21 comprises antennas 3 for connection with the electronic modules 5 via the connection elements 6, 6a. Said carrier layer 21 is then laminated and thus connected to the semi-finished product 1, in particular to the bottom side 11 of the semi-finished product 1 opposite to the metallic layer 9.

In doing so a data carrier 2 comprising a card body 25 is formed, see figures 4 and 5. That is, the carrier layer 21 is part of a card body 25 that comprises one or more layers. Here, said card body 25 further comprises a protection layer 26, also referred to as an overlay layer. That is, the data carrier 2 comprises a semi-finished product 1 being arranged on a card body 25. The data carrier 2 defines a top side 27 and an opposite bottom side 28, and wherein the semi-finished product 1, in particular its top side 10 and here at least partially its metallic layer 9 provides the top side 27 of the data carrier 2. The bottom side 28 of the data carrier 2 is provided by a bottom layer in the form of the protection layer 26. All components are connected to one another via lamination. However, prior to laminating the semi-finished product 1 to the carrier layer 21 or the card body 25, respectively, these components are collated.

Figure 5 depicts the insertion of the electronic modules 4 into the semi-finished products 1 of the data carriers 2. That is, the electronic modules 4 are partially arranged in cavities 23 being milled into the substrate 5 of the semi-finished product 1 in the region of the connection elements 6, 6a.

The thus established connection between the electronic modules 4 and the antennas 3 via the connection elements 6, 6a is a wired connection, that is, a physical connection. The antenna 3 comprises antenna pads 29 and the electronic module comprises module pads 30, and wherein the connection regions 19, 19a; 29, 20a or free end regions of the connection elements 6, 6a are attached to the antenna pads 29 and the module pads 30, respectively. The attachment of the connection regions 19, 19a; 29, 20a is achieved with the aid of anisotropic conductive film (ACF) bonding or an adhesive element such as silver glue or solder paste. Although not visible in figure 5, a top side 31 of the electronic module 4 is in each case arranged flush with the top side 27 of the data carrier 2.

Figure 6 shows a zoom of a sectional view through the data carrier according to figure 4 with adjusted dimension ratio. This figures notably shows that the diameter (dc) of the connection elements 6, 6a is higher than the length (Ic) of said connection elements. In the same way, this figure shows that each of the connection elements 6, 6a are dimensioned in order to overlap at least two adjacent portions of wire of the antenna 3. Such dimensions of the connection element allow for a reliable connection between the antenna and the electronic module.

As mentioned earlier, a plurality of semi-finished products 1 are provided on the carrier layer 21 in the form of a PVC-sheet. Hence, after insertion of the plurality of electronic modules 4, a plurality of individual data carriers 2 are obtained by singulation into individual data carriers 2.

Hence, in summary it can be said that the present invention can be seen as a moulding process enabling a pillar connection, i.e. a connection via connection elements 6, 6a. Thanks to the moulding process a shielding layer 13, that typically has poor adhesion, can easily be incorporated into the card body 25, and can thus be integrated during a moulding step, while distances or gaps needed for the antenna 3 and the shielding are maintained. The semi-finished product 1 according to the invention allows an insert of metallic layers 9 with pillar connection, i.e. via a connection through the connection elements 6, 6a, in a moulding process, that can be incorporated in the standard manufacturing of metal cards, for instance.

### LIST OF REFERENCE SIGNS

- 1: semi-finished product
- 2: data carrier
- 3: antenna
- 4: electronic module
- 5: substrate
- 6, 6a: connection element
- 7: top side of substrate
- 8: bottom side of substrate
- 9: metallic layer
- 10: top side of semi-finished product
- 11: bottom side of semi-finished product
- 12: through-hole of metallic layer
- 13: shielding layer
- 14: edge of semi-finished product
- 15: through-hole of shielding layer
- 16: mould
- 16a: top part of mould
- 16b: bottom part of mould
- 17, 17a: recess
- 18, 18a: recess
- 19, 19a: end region of connection element
- 20, 20a: end region of connection element
- 21: carrier layer
- 22: aperture
- 23: cavity
- 24, 24a, ...: insertion slots
- 25: card body
- 26: protection layer
- 27: top side of data carrier
- 28: bottom side of data carrier
- 29: antenna pad
- 30: module pad
- 31: top side of electronic module
- W: width direction of semi-finished product
- L: length direction of semi-finished product
- dc: diameter of connection element
- Ic: length of connection element
- tm: thickness of metallic layer
- ts: thickness of shielding layer

## Claims

1. A semi-finished product (1) for a data carrier (2) such as a smart card, the data carrier comprising at least one antenna (3) for communication with an external device and at least one electronic module (4) being electrically connected to the antenna (3),
wherein the semi-finished product (1) comprises:
- a substrate (5), and
- at least two connection elements (6, 6a),
wherein the substrate (5) is electrically non-conductive,
wherein the connection elements (6, 6a) are electrically conductive,
wherein the connection elements (6, 6a) are at least partially embedded in the substrate (5), and
wherein the connection elements (6, 6a) are configured to electrically connect the antenna (3) and the electronic module (4) of the data carrier (2).

2. The semi-finished product (1) according to claim 1, wherein the connection elements (6, 6a) extend from a top side (7) of the substrate (5) towards a bottom side (8) of the substrate (5) and preferably beyond the top side (7) and/or the bottom side (8) of the substrate (5).

3. The semi-finished product (1) according to any one of the preceding claims, wherein the connection elements (6, 6a) have a diameter (dc) at least equal to 400 micrometer.

4. The semi-finished product (1) according to any one of the preceding claims, wherein the connection elements (6, 6a) comprise or consist of at least one electrically conductive metal compound such as a metal and/or a metal alloy, for instance comprising at least one of silver, copper, gold, aluminium, iron or chrome, and/or
wherein the connection elements (6, 6a) have an elongated shape and/or a cylindrical shape, a rectangular shape, or the shape of a wire.

5. The semi-finished product (1) according to any one of the preceding claims, wherein the substrate (5) comprises or consists of at least one plastic, in particular a thermoplastic or a thermosetting plastic, and/or is at least one of curing or casting, and
wherein the substrate (5) preferably comprises or consists of a UV-curing resin or a thermal resin or a thermosetting resin.

6. The semi-finished product (1) according to any one of the preceding claims, further comprising at least one metallic layer (9), and wherein at least one of:
- the metallic layer (9) is arranged in a region of a top side (10) of the semi-finished product (1) and preferably at least partially provides at least part of the top side (10) of the semi-finished product (1),
- the metallic layer (9) extends until an edge (14) of the semi-finished product (1),
- the metallic layer (9) comprises or consists of at least one metallic compound such as steel, brass, copper, titanium, palladium, or gold and/or is electrically conductive or non-conductive, or
- the metallic layer (9) comprises at least one through-hole (12) being provided in the region of the connection elements (6, 6a).

7. The semi-finished product (1) according to any one of the preceding claims, further comprising at least one shielding layer (13), and wherein at least one of:
- the shielding layer (13) is configured to shield the antenna (3) and/or the electronic module (4) of the data carrier (2) from magnetic fields,
- the shielding layer (13) comprises or consists of at least one metallic compound and preferably is an alloy such as a ferromagnetic alloy, for instance a nickel-iron soft ferromagnetic alloy such as mu-metal,
- the shielding layer (13) is at least partially and preferably entirely embedded within the substrate (5) and/or is spaced from an edge (14) of the semi-finished product (1), or
- comprises at least one through-hole (15) being provided in the region of the connection elements (6, 6a).

8. A method of manufacturing a semi-finished product (1) as claimed in any one of the preceding claims, the method comprising the steps of:
- Providing a mould (16);
- Providing at least two connection elements (6, 6a) in the mould (16);
- Inserting, in particular injecting, one or more components forming the substrate (5) into the mould (16), and
- Hardening the injected one or more components.

9. The method according to claim 8, wherein the mould (16) comprises a bottom part (16b) and a top part (16a),
wherein the bottom part (16b) and/or the top part (16a) comprises at least two recesses (17, 17a; 18, 18a), and
wherein an end region (19, 19a; 20, 20a) of the connection elements (6, 6a) is in each case arranged in the recesses (17, 17a) of the bottom part (16b) and/or in the recesses (18, 18a) of the top part (16a).

10. The method according to claim 8 or 9, wherein, prior to inserting the one or more components forming the substrate (5) into the mould (16), at least one metallic layer (9) and/or at least one shielding layer (13) are arranged in the mould (16).

11. The method according to any one of claims 8 to 10, wherein the mould (16) comprises a plurality of sub-moulds,
wherein at least two connection elements (6, 6a) of a plurality of connection elements (6, 6a) are arranged in each sub-mould of the plurality of sub-moulds,
wherein the one or more components forming the substrate (5) are inserted into each sub-mould of the plurality of sub-moulds, and
wherein a plurality of semi-finished products (1) is manufactured at a time.

12. A data carrier (2) comprises:
- at least one semi-finished product (1) as claimed in any one of claims 1 to 7 and/or as manufactured in the method according to any one of claims 8 to 11,
- at least one electronic module (4), and
- at least one antenna (3),
wherein the electronic module (4) and the antenna (3) are electrically connected to one another via the connection elements (6, 6a) of the semi-finished product (1).

13. A data carrier (2) according to claim 12, wherein the antenna (3) comprises a wire with several adjacent portions, each of the connection elements (6, 6a) being dimensioned in order to overlap at least two adjacent portions of wire of the antenna (3).

14. A method of manufacturing a data carrier (2) as claimed in claim 13 comprising the steps of:
- Manufacturing at least one semi-finished product (1) as claimed in the method according to any one of claims 8 to 11,
- Providing at least one antenna (3), and
- Providing at least one electronic module (4), and
- Connecting the connection elements (6, 6a) with the electronic module (4) and the antenna (3).

15. The method according to claim 14, wherein, prior to providing the electronic module (4), at least one semi-finished product (1) is at least partially arranged in at least one carrier layer (21), and wherein at least one of:
- the carrier layer (21) comprises at least one aperture (22) in which the semi-finished product (1) is at least partially arranged,
- the carrier layer (21) comprises or consists of at least one plastics, in particular PVC,
- the carrier layer (21) has a sheet-form having an area expansion being larger than an area expansion of the semi-finished product (1),
- the carrier layer (21) comprises the antenna (3), or
- a plurality of semi-finished products (1) are at least partially arranged in the carrier layer (21).
